**Europäisches Patentamt**

**European Patent Office**

**Office européen des brevets**

(11) Publication number: **0 121 332**
**A2**

(12)

# EUROPEAN PATENT APPLICATION

(21) Application number: **84301352.5**

(22) Date of filing: **01.03.84**

(51) Int. Cl.³: **G 07 C 9/00**
**G 07 F 7/02, G 03 G 15/00**

(30) Priority: **02.03.83 GB 8305774**

(43) Date of publication of application:
**10.10.84 Bulletin 84/41**

(84) Designated Contracting States:
**AT BE CH DE FR GB IT LI LU NL SE**

(71) Applicant: **Neumann, Michael**
**68 Eastern Road**
**South Melbourne Victoria 3205(AU)**

(71) Applicant: **Bradbury, Geoffrey Roland**
**68 Eastern Road**
**South Melbourne Victoria 3205(AU)**

(72) Inventor: **Neumann, Michael**
**68 Eastern Road**
**South Melbourne Victoria 3205(AU)**

(74) Representative: **Allen, Oliver John Richard et al,**
**Lloyd Wise, Tregear & Co. Norman House 105-109 Strand**
**London, WC2R 0AE(GB)**

(54) Controllers.

(57) A controller for controlling the operation of a copying machine and maintaining records of its operation, in which a user inputs an encoded signal into the device corresponding to a particular user which is checked for allowability and if accepted enabling the copying machine, the machine normally being disabled. Then during operation each cycle of operation is counted and the count summed in one of number of memories, one associated with each possible encoded signal. Thus the copier will only work when a correct code is input and will then automatically keep a record of the number of copies made for that client and keep a running total. At the end of an accounting period one can then determine the total number of copies to be attributed to that code.

EP 0 121 332 A2

# C O N T R O L L E R S

This invention relates to a controller and, in particular, to a controller which can control the operation of a copying machine or the like and maintain records of its operation.

Copying machines are often used by a large number of persons and/or departments and it is often desirable to maintain accurate records of the usage by different persons.

In many organisations this control is achieved simply by providing a book or the like into which a user enters the number of copies made, and usually the date. Such an arrangement, whilst partially satisfactory if used by persons of goodwill, can be generally unsatisfactory if unscrupulous users are using the machine to make unauthorised copies and can be unsatisfactory even for honest users who neglect to make an entry into the book or make an incorrect estimate as to the number of copies taken before an entry is made.

Even where users accurately ensure that the necessary entries are made, there is still a substantial administrative problem in that, at the end of specified time periods, a supervisor has to total and attribute the various entries and, of course, there can be a very large number of entries over a short period, even for a relatively small number of users.

Some copiers offer, as an option, a number of plug-in counters, commonly known as "key counters". These units allow some control of copier use but, at best, give only a crude method of control and assignment of costs. They are relatively expensive and this, plus the administrative problem of tracking and accounting for numerous plug-in units, makes their use in any numbers both expensive and impractical.

An object of the invention is to provide a device which can conveniently control access to copying machines and record their usage.

Whilst in this specification we make reference to copying machines, it is to be understood that the term can refer generally not only to machines which, say, copy sheets of paper, or copy from microfiche or microfilm, but to any other devices which operate in a cyclic manner and for which costs per cycle can be estimated such as offset printers and more generally printing machines.

According to the invention, there is provided a device to control the operation of a copying machine (as herein defined) which device has input means for a user to input an encoded signal into the device corresponding to a particular user, comparator means within the device to check that the input is one of a number of allowable inputs, acceptance of the input by the comparator means initiating enabling means, which normally disable the copying machine, to permit the normal operation of the copying machine, counting means for counting each cycle of operation of the copying machine, a number of memories, one associated with each possible encoded signal, in which the total count of the counting means during any use of the copying machine whilst that encoded signal is accepted by the comparator means is summed and stored, and means for reading the count in each memory.

Such a device will keep accurate account of all copies made and since each memory is associated with a unique code which can correspond to an individual account or file, it is possible to allot the precise number of copies made to each account or file. In this way, since the copying machine will not operate until an acceptable code has been entered into the device it is not possible to forget to note the number of copies made or to note an incorrect number. The device is, however, very simple and convenient to operate.

The device of the invention can be fitted to an existing copying machine or could be built into the design of a new machine. Where the device is attached to an existing machine the enabling means can, for example, be associated with the power on/off switch for the copier but it is usually more preferred that the copier be ready for immediate action and so the enabling means can then be associated with the fault detecting system present in the copier which would normally disable the copier from making further copies until the fault detected is found and rectified. By way of example, the enabling means could include a relay operated switch associated with the "paper out" or "paper jam" detecting arrangements of the copies and in effect "trick" the copying machine into believing that these faults are present until an acceptable code has been entered into the device.

Preferably the input means includes a data entry keyboard and an alpha-numeric display is provided which can display either the encoded input signal or the number of copies associated therewith. The device should also have means whereby acceptable input signals can be coded into the machine and means whereby a supervisor can read the output of the machine associated with each input and, if required, reset these to zero.

The device may be mounted in a body having a data entry keyboard which comprises at least the ten digits and which may have other operative keys, and a digital display which can, if required, display either an input code or a number of copies.

The device may also include a key switch adapted for use by a supervisor but could, alternatively, use a specific code in the place of that switch.

In its simplest form, each user is provided with an account code of up to say six digits and the device is provided with means whereby an inputted account code can be checked against allowable account codes and, if the inputted code is an allowable code, then the enabling means operate by way of electrical connection with the copier, to cause the copier to be permitted to operate in its normal way. The copier can then be operated using its own controls as long as the correct account signal is retained in the memory of the device, which signal can be deleted from memory by an operator pressing a terminate key or the like or automatically after a predetermined period has passed since the last copy was taken.

When the copier is operating, on each cycle of operation, the memory in the device associated with the particular account code is increased by one and thus, at any time, memories in the device include a total count of the number of copies taken since the memories were last cleared and, more particularly, an indication of the copies attributable to each account code.

At any required period or time the supervisor, on operation of the switch or specific code, can examine the totals in each memory and, if required, can set these to zero after noting the total or totals concerned.

If required, associated with each account code, there may be means whereby, after a predetermined number of copies have been taken, the enabling device is overridden and no further copies can be taken until the device is reset. This can be particularly useful, for example, in a public copying machine whereby a user can pre-pay for a particular number of copies and, when this number has been completed, can take no further copies, notwithstanding the fact that the account code is known.

It will be seen that the device of the invention can permit an accurate control over the usage of copying machines in a manner which is very much more efficient than has heretofore been possible and which, at the same time, is substantially cheaper and simpler than by, say, the provision of a number of key counters.

The device will normally be operated from the copier power supply but, to ensure that it is not overridden or the memory lost, it can be provided with an inbuilt power source which is maintained in a state of charge by the copier power supply but, on any break in supply, can maintain its information for a substantial period, say, at least one week.

The device of the invention can be enhanced to provide a breakdown and analysis of particular copy usage. For example, where certain copies can be charged to particular clients, the device may be provided with means whereby, not only an account code can be incorporated, but also a further code which can be later used for attributing particular copies and this further information can either be stored in memories within the device or, preferably, can be transmitted to a data file on a magnetic tape device and, at predetermined intervals, the file can be read by a computer which can provide an output giving the required analysis.

Also, if required, a time of day and data clock could be incorporated so that this information is automatically passed to the data file when this is being prepared.

If required, the device could be permanently connected by a communication line to a computer so that the information held in the device could automatically be passed to the computer for updating and analysis.

Further, if required, a printer could be associated with the device so that a print-out could be directly obtained rather than having the necessity of manual reading and reset.

An example of a device according to the invention will now be described with reference to the accompanying drawings, in which:

Figure 1 is a perspective view of the device;

Figure 2 is a block diagram illustrating the operation of the device; and

Figure 3 is a detail of the part of the circuit controlling the operation of an associated copier and counting the number of cycles of its operation.

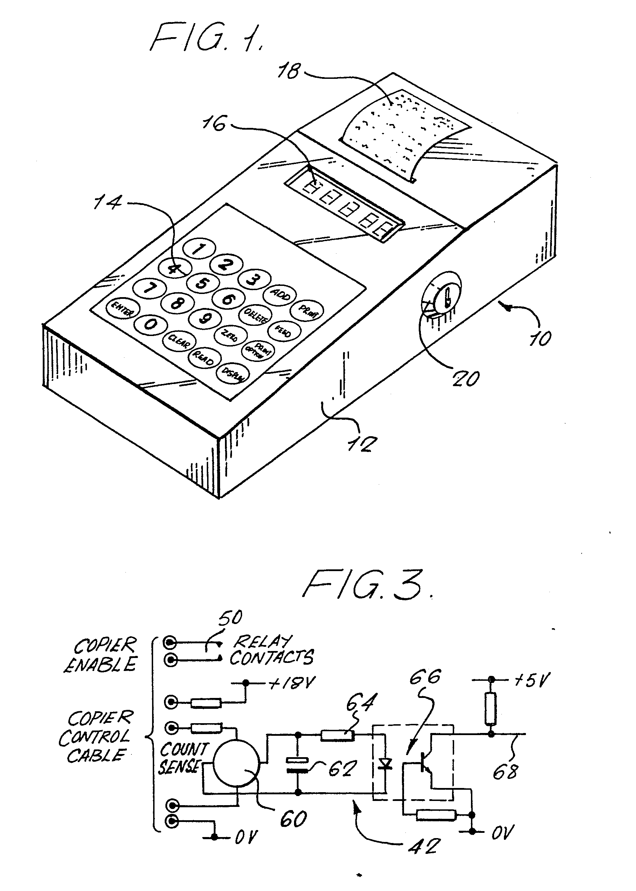

The device 10 shown in Figure 1 is housed in a box 12 and has on the upper face a keyboard 14 by means of which user codes and other operating commands can be input.

As can be seen the keyboard includes keys for the numbers 0 to 9 and other function keys. Thus the 0 - 9 numeric keys 0-9 are used for code and limit entry, the "Enter" key is used to enter the previously keyed numeric sequence in code search or limit and count entry procedures, the "Clear" key is used to restore the device to rest (disabled) condition after use or to clear an erroneous input, the "Read" key will display an accumulated count (one press) and count limit (second press) for current user, the "Add" key is to add a user code previously entered and not found, the "Delete" key will delete a user code previously entered and found and the "Print" key will print a list of user codes with limit count and accumulated count.

The upper face also has an alpha-numeric display 16 such as a LED or liquid crystal display so that the user can see the numbers which he inputs or for example a total count from a memory.

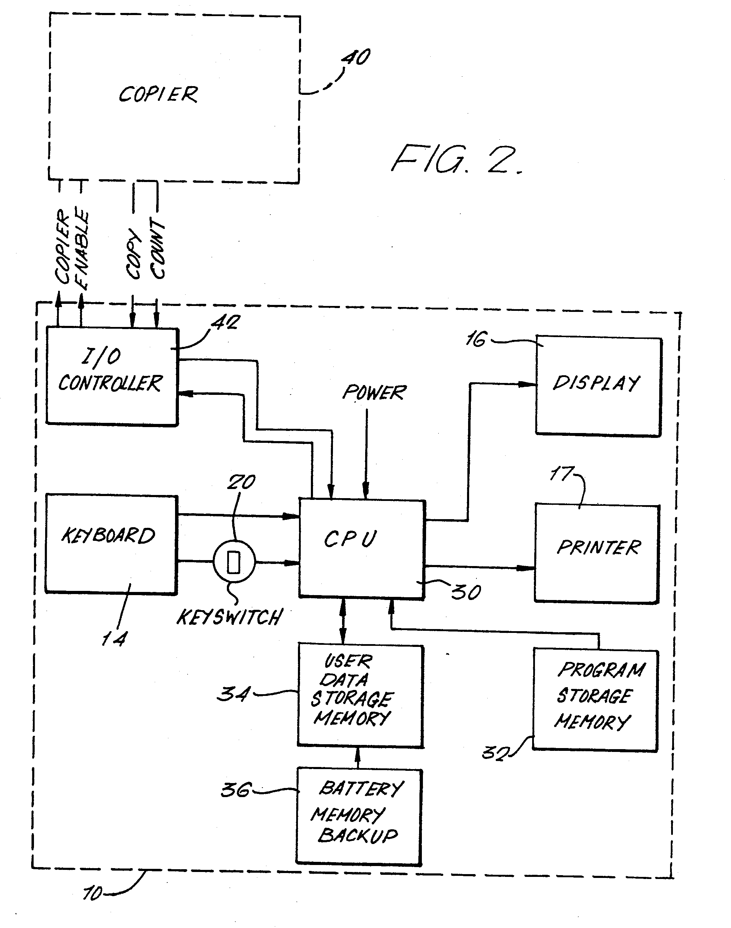

The box 12 contains a small conventional printer 17 (Figure 2), e.g. a small dot-matrix thermal printer, and it is possible to print an output list of totals versus account codes on a strip of paper 18.

On the side of the box 12 is a key operated switch 20 to enable a supervisor provided with the key to obtain totals, reset the totals, etc. upon turning of the switch 20.

The operation of the device is illustrated in Figure 2. Central to the operation of the device 10 is a CPU 30 which could for example be a chip such as that sold by RCA under the number CDP 1802. The operation of this unit 30 is controlled by a ROM chip 32 containing the program.

Also associated with the unit 30 are RAM chips 34 in which user codes and count total for each code are retained. To retain the memory in the chips 34 should the main power supply to the device fail, a rechargeable battery back-up supply 36 is provided.

The keyboard 14 has an input to the unit 30 as also does the key switch 20. Outputs from the unit 30 control the display 16 and printer 17.

The device 10 and in particular the unit 30 is linked to a copier 40 through an input/output controller 42 which is shown also in more detail in Figure 3. The actuation of the copier 40 is under the control of relay contacts 50 which in the open position disable the copier 40 and in the closed position allow it to operate. As noted above these relay contacts can be positioned in series with one of the fault detecting mechanisms of the copier 40. The opening and closing of the contacts 50 is controlled by the CPU 30 and so isolate the unit 10 from the copier 40.

In addition the controller 42 is linked to the counter (not shown) of the copier to determine the number of cycles of operation when it is enabled. This counter of the copier receives a pulse to advance the counter each cycle and that pulse is also received by the controller 42. The pulse passes to a bridge 60 whose sense can be altered by the person setting up the device so that it can accept negative or positive logic pulses. The pulse then passes via a filter comprising a capacitor 62 and resistor 64 to an optical coupler 66 to complete the electrical insulation of the device 10 from the copier 42. The pulse provides an output via line 68 to the CPU 30.

It is believed that the operation of the device 10 will be clear from the prior general description.

CLAIMS:

1.        A device to control the operation of a copying machine (as herein defined) which device has input means for a user to input an encoded signal into the device corresponding to a particular user, comparator means within the device to check that the input is one of a number of allowable inputs, acceptance of the input by the comparator means initiating enabling means, which normally disable the copying machine, to permit the normal operation of the copying machine, counting means for counting each cycle of operation of the copying machine, a number of memories, one associated with each possible encoded signal, in which the total count of the counting means during any use of the copying machine whilst that encoded signal is accepted by the comparator means is summed and stored, and means for reading the count in each memory.

2.        A device as claimed in Claim 1 in which the comparator means check the input is an allowable input and additionally check the memory associated with that allowable input to determine if a pre-set maximum count has been reached in that memory, whereby the enabling means are not initiated even for an allowable input if the total pre-set maximum number of copies have already been made for that input.

3.        A device as claimed in Claim 1 or Claim 2 further comprising timing means for allowing the enabling means to again disable the copying machine a pre-set period of time after the enabling means are initiated or if copies are then made a pre-set period of time after the last copy was made.

4. A device as claimed in any preceding claim having means for obtaining the totals in each memory at any particular time.

5. A device as claimed in Claim 4 in which after the total from each memory have been obtained, means are provided to re-set all of the memory totals to zero.

6. A device as claimed in any preceding claim having a back-up power supply for the memories so as to retain the information in the memories in the event of power loss for the device.

7. A device as claimed in any preceding claim in which the input means include a keyboard for entering the encoded signal in the form of a number or the like, a display for providing a visible record of the entries made through the keyboard and/or displaying the total in any memory, and a printer for obtaining a written record of the totals in all the memories.

0121332

**FIG. 1.**

**FIG. 3.**

FIG. 2.

COPIER — 40

COPIER ENABLE

COPY COUNT

I/O CONTROLLER — 42

POWER

DISPLAY — 16

KEYBOARD — 14

20

KEYSWITCH

CPU — 30

PRINTER — 17

USER DATA STORAGE MEMORY — 34

PROGRAM STORAGE MEMORY — 32

BATTERY MEMORY BACKUP — 36

10